# EUROPEAN PATENT SPECIFICATION

(11) **EP 1 377 195 B1**
(45) Date of publication and mention of the grant of the patent: **06.07.2005**
(21) Application number: 01987634.1
(22) Date of filing: 12.10.2001
(51) Int. Cl.: A47J 45/10

(54) **REMOVABLE HANDLE**
LÖSBARER GRIFF
POIGNEE AMOVIBLE

(30) Priority: 12.10.2000 ZA 200005604; 04.01.2001 ZA 200100070
(43) Date of publication of application: 07.01.2004
(73) Proprietor: Fourie, Annemie Anne Maria, 0042 Pretorius Park (ZA)
(72) Inventor: Fourie, Annemie Anne Maria, 0042 Pretorius Park (ZA)
(74) Representative: Dearing-Lambert, Peter Richard
(86) International application number: PCT/ZA2001/000159
(87) International publication number: WO 2002/032276

(56) References cited:
- FR-A- 514 297
- FR-A- 1 361 405
- GB-A- 201 334
- US-A- 2 404 224
- US-A- 3 232 657

## Description

### Field of the Invention

This invention relates to a removable handle, and, more specifically to a removable handle for an item of cookware.

### Background to the Invention

When cookware such as, for example, pots, pans or casserole dishes, are used on a stove or in an oven, the uninsulated handles of the cookware quickly become so hot, that it is no longer possible to pick the item of cookware up with one's bare hands.

In order to alleviate this problem, items of cookware are provided with handles that do not heat up readily and/ or that do not readily store heat such as, for example, wooden handles or handles manufactured from a suitable metal. However, even such handles do heat up after a period of time, again making it difficult to pick up the item of cookware with one's bare hands.

Oven cloths or oven gloves can also be used to pick up hot items of cookware, but the grip provided by an oven cloth or oven glove is often very weak, making it difficult to pick up heavier items without running the risk of them being dropped.

An attempt to overcome the abovementioned problems can be found in French patent number 514.297 filed on 23 April 1920 in the name of M.G. Molinier. The patent disclosed a device having two hingedly connected casings configured and dimensioned to fit over a handle of a pot wherein the interior of the casings is shaped to receive the handle.

The inventor therefore believes, that a need exists for a device that will allow a user to pick up or handle an item of cookware without the hands of the user being burnt, even if said item has been exposed to heat for lengthy periods of time.

### Summary of the Invention

Thus, according to the invention there is provided a removable handle for cookware including a casing having an upper and a lower portion, the casing being dimensioned to at least partially receive a handle of an item of cookware characterized in that the handle includes resiliently deformable zones located in the casing, so that when the zones are urged together, they grip the handle of the item of cookware.

The upper and lower portions of the casing may be hingedly connected. The hinge may form an integral part of the casing or may be separately mounted.

The casing may be provided with a releasable securing mechanism that secures the upper and lower portions of the casing in a closed position.

The securing mechanism may be in the form of a releasable catch. The catch may include at least one toothed member having one or more teeth.

In use, the securing mechanism secures the upper and lower portions in a closed position when a user is using the removable handle and is released when the user wishes to remove the removable handle from the item of cookware.

The zones may be releasably attached to the upper and lower portions of the casing by way of any suitable attachment means such as, for example, a press-stud arrangement, a snap-fit arrangement or a hook and loop arrangement. In this way, the resiliently deformable zones may be replaced should they suffer from wear and tear.

The zones may be of a segmented structure to allow them to be resiliently deformable such as, for example, a ribbed structure or a honeycomb structure.

The zones may be manufactured from a heat resistant material selected from the group including: wood, cork, natural rubber, synthetic rubber, nylon, any suitable polypropylene and synthetic plastics material.

At least a portion of the removable handle may be manufactured from an insulating material so as to avoid the handle becoming hot when handling a hot item of cookware.

The upper and lower portions of the casing may be shaped so as to allow easy gripping thereof by a user.

The casing may be manufactured from a suitable heat-resistant synthetic plastics material or a material of plant origin such as wood or cork.

The removable handle may be provided in a range of sizes to accommodate different sizes of handles. In particular, the handle may be shaped to accommodate handles found on pots, casserole dishes, woks, pans and the like.

Each different size of removable handle may be provided in a different colour to allow easy differentiation between the handles, however, any size may be made in any colour.

The invention extends to a set of removable handles including a plurality of removable handles as described above. Typically, for two-handled cookware the handles are provided in sets of two, each removable handle being configured to be used on one handle of an item of cookware, however, the handles may be provided individually.

### Detailed Description of the Invention

The invention will now be described by way of the following non-limiting example with reference to the accompanying drawings.

In the drawings:
Figure 1 shows a plan view of an embodiment of a removable handle in accordance with the present invention;
Figure 2 shows a front view of the handle of Figure 1;
Figure 3 shows a perspective end view of the handle of Figures 1 and 2;
Figure 4 shows a perspective plan view of the handle of Figures 1 to 3 without the resiliently deformable zones and the releasable securing mechanism in an open condition;
Figure 5 shows a perspective plan view of a resiliently deformable zone to be inserted into the upper and lower portions of the handle of Figure 4;
Figure 6 shows an enlarged perspective view of the releasable securing mechanism shown in Figure 7; and
Figure 7 shows a perspective plan view of the handle of Figures 1 to 3.

In the drawings, reference numeral 10 generally indicates an embodiment of a removable handle in accordance with the present invention.

A removable handle for cookware 10 includes a casing 12 having an upper 14 and a lower 16 portion, the casing 12 being dimensioned to at least partially receive a handle of an item of cookware (not shown) and resiliently deformable zones 18 and 20 located in the casing 12, so that when the zones 18 and 20 are urged together, they grip the handle of the item of cookware.

The upper 14 and lower 16 portions of the casing 12 are hingedly connected, the hinges 22 forming an integral part of the casing 12.

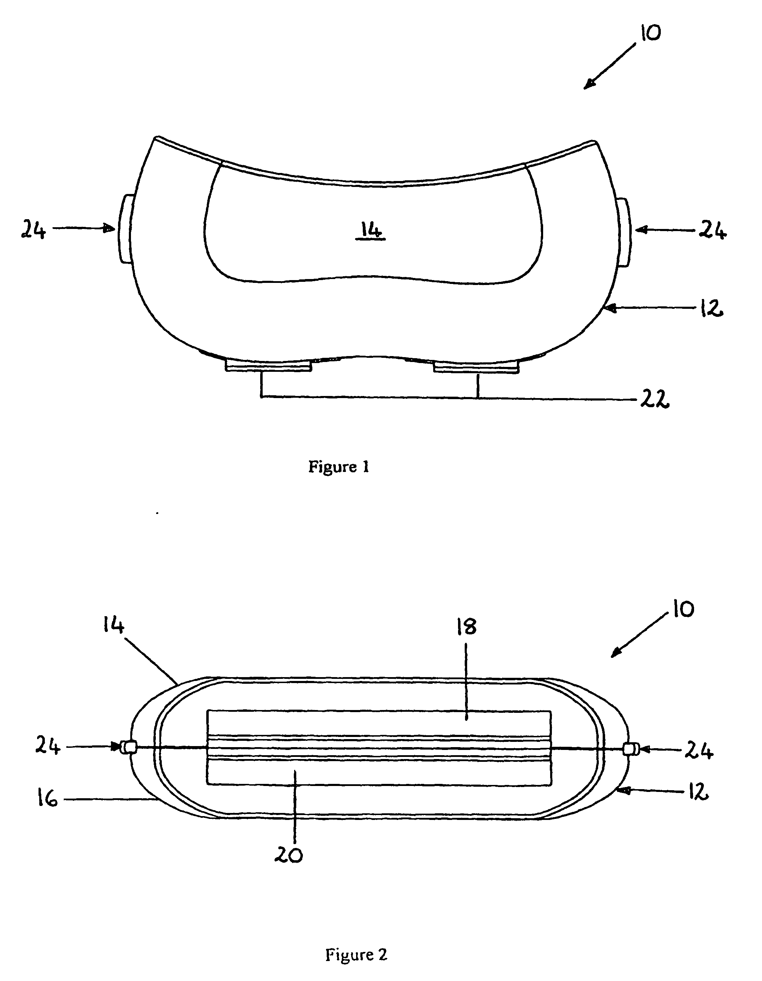

The casing 12 is provided with a releasable securing mechanism 24 that secures the upper 14 and lower 16 portions of the casing 12 in a closed position as shown in Figures 1 to 3.

The securing mechanism 24 is in the form of a releasable catch 26.

The zones 18 and 20 are releasably attached to the upper 14 and lower 16 portions of the casing 12 means of a snap-fit arrangement 28 as shown in Figure 7. In this way, the resiliently deformable zones 18 and 20 are replaceable should they suffer from wear and tear.

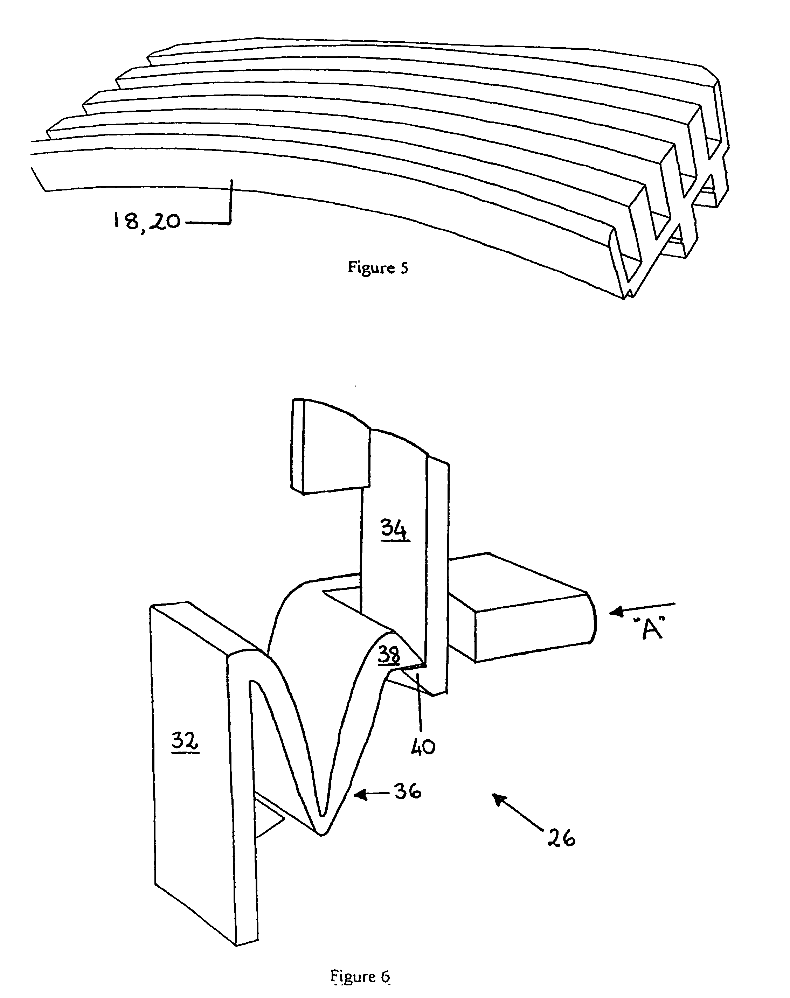

The zones 18 and 20 in the embodiment shown are of a ribbed structure as shown in Figures 5 and 7, to allow them to be resiliently deformable. The upper 14 and lower 16 portions of the casing 12 are also provided with ribs 30 to allow the zones 18 and 20 to be easily aligned and snugly fit into the zones 18 and 20.

The zones 18 and 20 are manufactured from a natural or synthetic heat resistant rubber.

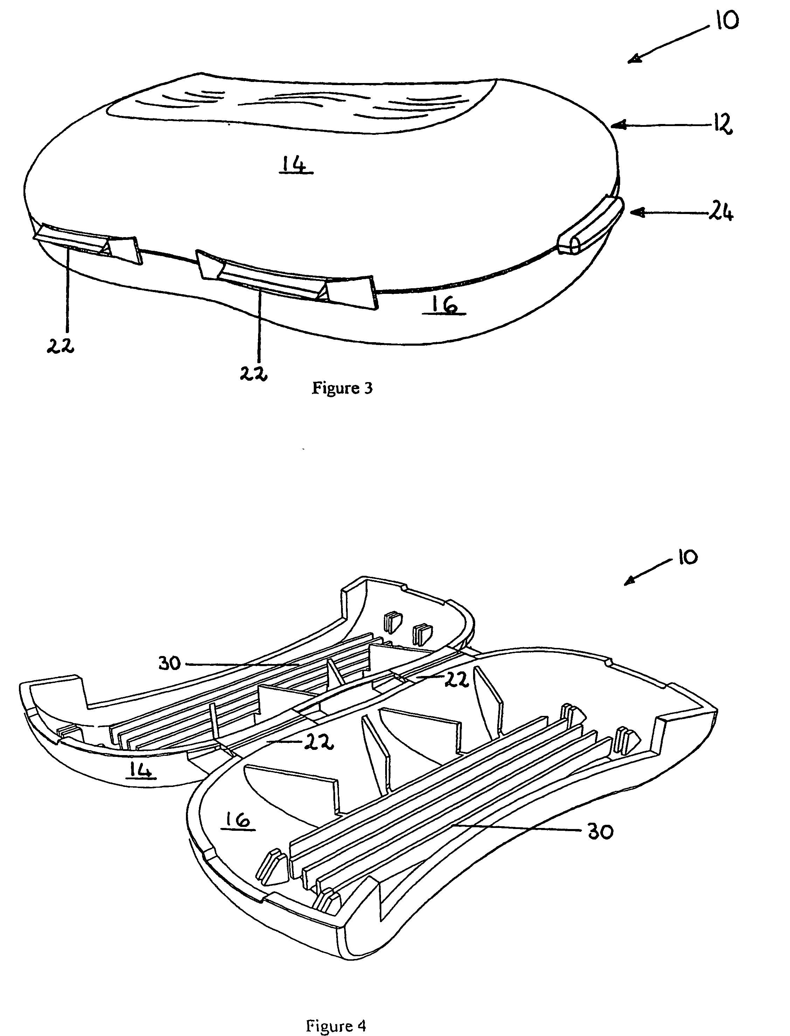

The outer surfaces of the upper 14 and lower 16 portions of the casing 12 are shaped so as to allow easy gripping thereof by a user (not shown) as can be seen particularly well in Figure 3.

The casing 12 is manufactured from a suitable heat-resistant synthetic plastics material, typically polypropylene.

The removable handle 10 is provided in a range of sizes to accommodate different sizes of handles. In particular, the handle 10 is shaped to accommodate handles found on pots, casserole dishes, woks, pans and the like.

Each different size of removable handle 10 is provided in a different colour to allow easy differentiation between the handles 10.

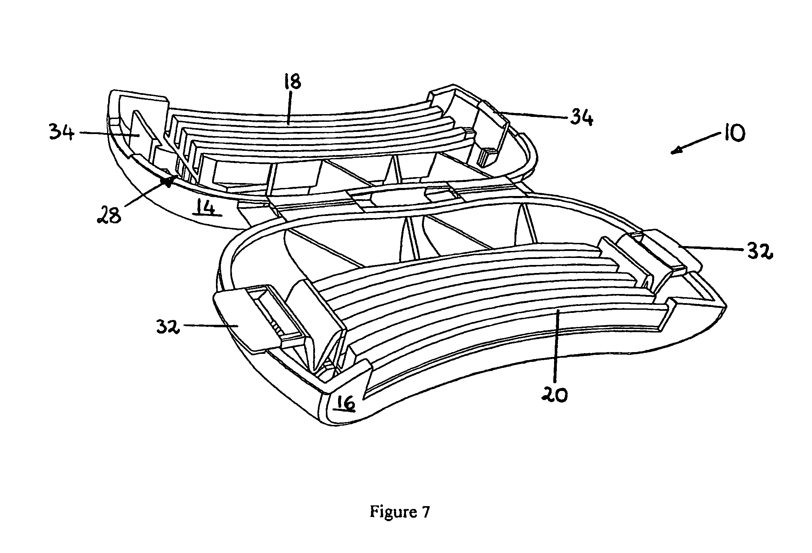

Referring now to Figures 6 and 7, the releasable catch 26 includes components 32 and 34. Component 32 includes a biasing means in the form of leaf spring 36. It furthermore includes an engaging formation 38 for engaging a tooth 40 of component 34 as shown in Figure 6, when the upper 14 and lower 16 portions of the casing 12 are urged together, thereby securing the upper 14 and lower 16 portions in a closed position.

When a user wishes to remove the removable handle 10 from the handle of an item of cookware, he pushes component 32 of the releasable catch 26 in the direction of arrow "A" shown in Figure 6, thereby compressing leaf spring 36 and allowing tooth 40 to disengage from engaging formation 38.

## Claims

1. A removable handle (10) for cookware including a casing (12) having an upper (14) and a lower (16) portion, the casing (12) being dimensioned to at least partially receive a handle of an item of cookware **characterized in that** the handle (10) includes resiliently deformable zones (18) and (20) located in the casing (12), so that when the zones (18) and (20) are urged together, they grip the handle of the item of cookware.

2. A removable handle (10) as claimed in claim 1 wherein the upper and lower portions (14) and (16) of the casing (12) are hingedly connected.

3. A removable handle (10) as claimed in any one of claims 1 or 2 wherein the casing (12) is provided with a releasable securing mechanism (24) that secures the upper and lower portions (14) and (16) in a closed position.

4. A removable handle (10) as claimed in claim 3 wherein the securing mechanism (24) is in the form of a releasable catch (26).

5. A removable handle (10) as claimed in claim 4 wherein the catch (26) includes at least one toothed member having one or more teeth.

6. A removable handle (10) as claimed in any one of the claims 2 to 5 wherein the zones (18) and (20) are releasably attached to the upper and lower (14) and (16) portions of the casing (12).

7. A removable handle (10) as claimed in claim 6 wherein the zones (18) and (20) are of a segmented structure to allow them to be resiliently deformable.

8. A removable handle (10) as claimed in claim 6 or claim 7 wherein the zones (18) and (20) are manufactured from a heat resistant material selected from the group including: wood, cork, natural rubber, synthetic rubber, nylon, any suitable polypropylene and synthetic plastics material.

9. A removable handle (10) as claimed in any one of the preceding claims wherein at least a portion of the handle (10) is manufactured from an insulating material.

10. A removable handle (10) as claimed in any one of the preceding claims wherein the outer surfaces of the upper and lower portions (14) and (16) of the casing (12) are shaped so as to allow easy gripping thereof by a user.

11. A removable handle (10) as claimed in claim 10 wherein the casing (12) is manufactured from a suitable heat-resistant synthetic plastics material.

12. A removable handle (10) as claimed in claim 10 wherein the casing (12) is manufactured from a material of plant origin.

13. A removable handle (10) as claimed in any one of the preceding claims wherein the removable handle (10) is provided in a range of sizes to accommodate different sizes of handles.

14. A removable handle (10) as claimed in claim 13 wherein each different size of removable handle (10) is provided in a different colour.

15. A set of removable handles including one or more removable handles (10) as claimed in any one of claims 1 to 14.

## Patentansprüche

1. Lösbarer Griff (10) für Kochgeschirr mit einem Gehäuse (12), das einen oberen (14) und einen unteren (16) Abschnitt aufweist, wobei das Gehäuse (12) so bemessen ist, dass es einen Griff eines Kochgeschirrartikels mindestens teilweise aufnimmt, **dadurch gekennzeichnet, dass** der Griff (10) elastisch verformbare Zonen (18) und (20) aufweist, die im Gehäuse (12) angeordnet sind, so dass die Zonen (18) und (20) beim Zusammendrücken den Griff des Kochgeschirrartikels packen.

2. Lösbarer Griff (10) nach Anspruch 1, bei dem der obere und der untere Abschnitt (14) und (16) des Gehäuses (12) gelenkig verbunden sind.

3. Lösbarer Griff (10) nach Anspruch 1 oder 2, bei dem das Gehäuse (12) mit einem freigebbaren Befestigungsmechanismus (24) versehen ist, der den oberen und den unteren Abschnitt (14) und (16) in einer geschlossenen Position befestigt.

4. Lösbarer Griff (10) nach Anspruch 3, bei dem der Befestigungsmechanismus (24) in der Form einer freigebbaren Rastklinke (26) ist.

5. Lösbarer Griff (10) nach Anspruch 4, bei dem die Rastklinke (26) mindestens ein gezahntes Glied mit einem oder mehreren Zähnen aufweist.

6. Lösbarer Griff (10) nach einem der Ansprüche 2 bis 5, bei dem die Zonen (18) und (20) freigebbar an dem oberen (14) und dem unteren (16) Abschnitt des Gehauses (12) angebracht sind.

7. Lösbarer Griff (10) nach Anspruch 6, bei dem die Zonen (18) und (20) eine segmentierte Struktur haben, damit sie elastisch verformbar sind.

8. Lösbarer Griff (10) nach Anspruch 6 oder 7, bei dem die Zonen (18) und (20) aus einem hitzebeständigen Material, ausgewählt aus der Gruppe, die Holz, Kork, Naturkautschuk, synthetischer Kautschuk, Nylon, ein beliebiges geeignetes Polypropylen- und synthetisches Kunststoffmaterial einschließt, hergestellt sind.

9. Lösbarer Griff (10) nach einem der vorhergehenden Ansprüche, bei dem mindestens ein Abschnitt des Griffs (10) aus einem Isoliermaterial hergestellt ist.

10. Lösbarer Griff (10) nach einem der vorhergehenden Ansprüche, bei dem die Außenflächen des oberen (14) und des unteren (16) Abschnitts des Gehäuses (12) so gestaltet sind, dass sie für einen Benutzer griffig sind.

11. Lösbarer Griff (10) nach Anspruch 10, bei dem das Gehäuse (12) aus einem geeigneten hitzebestandigen synthetischen Kunststoffmaterial hergestellt ist.

12. Lösbarer Griff (10) nach Anspruch 10, bei dem das Gehäuse (12) aus einem Material mit pflanzlichem Ursprung hergestellt ist.

13. Lösbarer Griff (10) nach einem der vorhergehenden Ansprüche, bei dem der lösbare Griff (10) fur unterschiedlich große Griffe in mehreren Größen vorgesehen ist.

14. Lösbarer Griff (10) nach Anspruch 13, bei dem jede unterschiedliche Größe des lösbaren Griffs (10) eine andere Farbe hat.

15. Satz lösbarer Griffe mit einem oder mehreren lösbaren Griffen (10) nach einem der Ansprüche 1 bis 14.

## Revendications

1. Poignée amovible (10) pour articles culinaires comportant un corps (12) comprenant une partie supérieure (14) et une partie inférieure (16), le corps (12) étant dimensionné pour recevoir au moins partiellement une poignée d'un article culinaire, **caractérisée en ce que** la poignée (10) comporte des zones déformables élastiquement (18) et (20) situées dans le corps (12), de façon à ce que les zones (18) et (20) agrippent la poignée de l'article de cuisine lorsqu'elles sont serrées l'une contre l'autre.

2. Poignée amovible (10) selon la revendication 1, dans laquelle les parties supérieure et inférieure (14) et (16) du corps (12) sont reliées par charnière.

3. Poignée amovible (10) selon l'une quelconque des revendications 1 ou 2, dans laquelle le corps (12) est pourvu d'un mécanisme de verrouillage déclenchable (24) qui verrouille les parties supérieure et inférieure (14) et (16) en position fermée.

4. Poignée amovible (10) selon la revendication 3, dans laquelle le mécanisme de verrouillage (24) prend la forme d'un cliquet déclenchable (26).

5. Poignée amovible (10) selon la revendication 4, dans laquelle le cliquet (26) comporte au moins un organe denté comprenant une ou plusieurs dents.

6. Poignée amovible (10) selon l'une quelconque des revendications 2 à 5, dans laquelle les zones (18) et (20) sont fixées de façon déclenchable aux parties supérieure et inférieure (14) et (16) du corps (12).

7. Poignée amovible (10) selon la revendication 6, dans laquelle les zones (18) et (20) présentent une structure segmentée pour en permettre la déformation élastique.

8. Poignée amovible (10) selon la revendication 6 ou la revendication 7, dans laquelle les zones (18) et (20) sont fabriquées à partir d'une matière réfractaire choisie dans le groupe constitué du bois, du liège, du caoutchouc naturel, du caoutchouc synthétique, du nylon, d'un polypropylène adéquat quelconque et d'une matière plastique synthétique.

9. Poignée amovible (10) selon l'une quelconque des revendications précédentes, dans laquelle une partie au moins de la poignée (10) est fabriquée à partir d'une matière isolante.

10. Poignée amovible (10) selon l'une quelconque des revendications précédentes, dans laquelle les surfaces extérieures des parties supérieure et inférieure (14) et (16) du corps (12) sont profilées pour permettre à un utilisateur de la agripper facilement.

11. Poignée amovible (10) selon la revendication 10, dans laquelle le corps (12) est fabriqué à partir d'une matière plastique synthétique réfractaire adéquate.

12. Poignée amovible (10) selon la revendication 10, dans laquelle le corps (12) est fabriqué à partir d'une matière d'origine végétale.

13. Poignée amovible (10) selon l'une quelconque des revendications précédentes, dans laquelle la poignée amovible (10) est prévue en plusieurs tailles pour s'adapter à différentes tailles de poignées.

14. Poignée amovible (10) selon la revendication 13, dans laquelle chaque taille différente de la poignée amovible (10) est prévue dans une couleur différente.

15. Assortiment de poignées amovibles comportant une ou plusieurs poignées amovibles (10) selon l'une quelconque des revendications 1 à 14.
